# EUROPÄISCHE PATENTSCHRIFT

(11) **EP 1 565 124 B1**
(45) Veröffentlichungstag und Bekanntmachung des Hinweises auf die Patenterteilung: **20.06.2012**
(21) Anmeldenummer: 03812133.1
(22) Anmeldetag: 01.08.2003
(51) Int. Cl.: A61C 17/34

(54) **ELEKTRISCHE ZAHNBÜRSTE**
ELECTRIC TOOTHBRUSH
BROSSE A DENTS ELECTRIQUE

(30) Priorität: 28.11.2002 DE 10255390
(43) Veröffentlichungstag der Anmeldung: 24.08.2005
(73) Patentinhaber: Braun GmbH, 61476 Kronberg (DE)
(72) Erfinder: BOLAND, Bernhard, 60385 Frankfurt am Main (DE); JUNK, Christian, 65760 Eschborn (DE)
(86) Internationale Anmeldenummer: PCT/EP2003/008518
(87) Internationale Veröffentlichungsnummer: WO 2004/049968

(56) Entgegenhaltungen:
- DE-A- 2 019 003
- DE-A- 19 935 067
- DE-U- 8 535 358
- US-A- 3 178 754

## Beschreibung

Die vorliegende Erfindung betrifft eine elektrische Zahnbürste. Die Erfindung betrifft dabei insbesondere den Bürstenteil für eine solche elektrische Zahnbürste.

Es wurden bereits Zahnbürsten vorgeschlagen, bei denen neben den Borsten Druckluftdüsen vorgesehen sind, um zusätzlich zur Reinigungswirkung der Borsten die Zähne und Zahnzwischenräume mit Druckluft zu reinigen, insbesondere haftende Partikel wegzublasen und auch eine gewisse Massagewirkung zu erreichen. Die Druckschrift US 3,823,710 zeigt eine Handzahnbürste, bei der aus einem frontseitigen, neben dem Borstenfeld angeordneten Druckluftkopf ein pulsierender Luftstrom austritt, der durch eine Tandem-Diaphragmapumpe erzeugt wird. Der Druckluftkopf ist mit einem Druckluftkanal im Stiel der Zahnbürste verbunden, die an ihrem Handteil über einen Schlauch mit der Druckluftpumpe verbunden ist. In der Druckschrift US 3,178,754 wird bereits eine elektrische Zahnbürste mit Druckluftvorrichtung vorgeschlagen. Im Handteil der Zahnbürste ist eine Luftpumpe vorgesehen, die Druckluft in das Innere des sich bewegenden Zahnbürstenkopfs leitet. Unter dem Borstenträger ist eine Druckfluidkammer ausgebildet, in der sich der von der Kolbenpumpe kommende, pulsierende Luftdruck vergleichmäßigt und durch Austrittsdüsen in das Borstenfeld als im wesentlichen gleichförmiger Luftstrom austritt.

Aus der DE 20 19 003 A1 ist eine elektrische Zahnbürste bekannt, aus deren Bürstenkopf Wasser gegen die zu reinigenden Zähne bzw. auf das umgebende Zahnfleisch gesprüht wird. Die Wassersprayvorrichtung umfasst dabei einen vom Antriebsmotor der Zahnbürste angetriebenen Kompressor, der Druckluft in einen Wasserspeicher im Handteil der Zahnbürste fördert, so dass ein unter Druck stehendes Wasser-Luft-Gemisch bereitgestellt wird. Dieses wird über eine Leitung in einen Förderkanal im Inneren der Aufsatzbürste geleitet, von dem aus es zum Kopf der Bürste gefördert wird. Diese bekannte Aufsatzbürste wird jedoch im Gegensatz zu modernen Aufsatzbürsten insgesamt bewegt, d.h. sie besitzt kein fest mit dem Handteil koppelbares Bürstenrohr, in dessen Inneren ein separater Antriebsstrang vorgesehen und an dessen stirnseitigem Ende ein beweglicher Borstenträger beweglich gelagert wäre.

Aus DE 19935067 ist eine elektrische Zahnbürste bekannt, die ein Bürstenteil gemäß dem Oberbegriff des Anspruchs 1 als integrales Bauteil aufweist.

Der vorliegenden Erfindung liegt daher die Aufgabe zugrunde, einen verbesserten Bürstenteil für eine elektrische Zahnbürste zu schaffen, die die Nachteile des Standes der Technik vermeiden und letzteren in vorteilhafter Weise weiterbilden. Insbesondere soll mit einer einfach und kompakt aufgebauten Zahnbürste ein besseres Aufschäumen der Zahnpaste erreicht werden.

Diese Aufgabe wird durch ein Bürstenteil gemäß Anspruch 1 gelöst. Bevorzugte Ausgestaltungen der Erfindung sind Gegenstand der Unteransprüche.

Das Bürstenteil zeichnet sich also erfindungsgemäß durch seine Druckfluidvorrichtung zur Beaufschlagung der zu reinigenden Zähne bzw. des Borstenfelds mit Druckfluid aus, die eine Druckfluidzufuhr im Inneren des beweglichen Antriebsübertragers aufweist. Ein Druckfluidkanal, der das Druckfluid zum Zahnbürstenkopf führt, ist also in den regelmäßig stabförmigen bzw. stangenförmigen Antriebsübertrager integriert.

Insbesondere kann der Antriebsübertrager als Hohlwelle ausgebildet sein, die drehbar um ihre Längsachse in dem Trägerrohr gelagert ist und an ihrem handteilseitigen Ende ein Kupplungsstück zum Ankuppeln an ein handteilseitiges Antriebselement aufweist, wobei das Kupplungsstück eine Fluidkupplung umfasst, durch die der Fluidkanal im Inneren der Hohlwelle mit einem Fluidkanal im Inneren des handteilseitigen Antriebswellenstücks verbindbar ist. Die rotatorisch oszillierende Antriebsbewegung der Antriebswelle im Trägerrohr kann auf verschiedene Weise in die Antriebsbewegung des Borstenträgers umgesetzt werden. Vorteilhafterweise kann an der Antriebswelle ein exzentrisches Kupplungs- bzw. Mitnehmerstück drehfest befestigt sein, das mit dem Borstenträger in Eingriff steht, um diesen ebenfalls rotatorisch oszillierend anzutreiben. Die Bewegungsachse des Borstenträgers und die Bewegungsachse der Antriebswelle erstrecken sich in zueinander im wesentlichen senkrechte Richtungen.

Durch die vorteilhafterweise nur einachsige Antriebsbewegung des Antriebsübertragers in dem Trägerrohr vereinfacht sich die Weiterleitung des Fluidstroms, der aus dem bürstenkopfseitigen Ende des Antriebsübertragers wieder austritt. Vorteilhafterweise wird der Fluidstrom im Bereich des Lagers, das den Antriebsübertrager um seine Längsachse drehbar lagert, in einen Fluidkanal in der Trägerrohrwandung eingeleitet. Die Fluidleitung in der Trägerrohrwandung ist also mit dem Lagerabschnitt für den Antriebsübertrager strömungsverbunden. Andererseits ist der Druckfluidkanal in der Trägerrohrwandung mit dem beweglich gelagerten Borstenträger strömungsverbunden. Um eine einfache Einleitung des Druckfluids von dem Druckfluidkanal in der Trägerrohrwandung in den Borstenträger zu erreichen, führt der Druckfluidkanal von der Trägerrohrwandung in den Lagerabschnitt, in dem der Borstenträger drehbar gelagert ist. Insbesondere kann der Borstenträger auf einer Lagerachse sitzen, die in einem Kopfabschnitt des Bürstenträgerrohrs befestigt ist. Der Fluidkanal geht vorzugsweise durch die Lagerachse des Borstenträgers. Vorteilhafterweise ist eine hohle Schwenkachse für den Borstenträger vorgesehen, durch die das Druckfluid dem Borstenträger zugeführt werden kann. Durch das Innere des Borstenträgers hindurch ist sodann ebenfalls zumindest ein Druckfluidkanal vorgesehen, der zu einer Druckfluidaustrittsöffnung auf dem Boden des Borstenträgers führt, an dem die Borsten verankert sind. Zweckmäßigerweise ist eine zentrale Austrittsdüse im Borstenträger vorgesehen, die derart ausgebildet ist, dass ein Druckfluidstrahl etwa parallel zur Borstenhauptrichtung aus dem Borstenträger austritt und gegen die zu reinigenden Zähne gelenkt wird.

Die Druckfluidzufuhr im Inneren des Bürstenteils zeichnet sich dabei also dadurch aus, dass sie frei von separaten Schläuchen ausgebildet ist und ausschließlich im Inneren von Funktionsteilen des Bürstenteils, die bereits zur Verwirklichung anderer Funktionen vorhanden sind, gebildet wird. Die Druckfluidkanäle verlaufen in Bauteilen wie z. B. dem beweglichen Antriebsstrang im Inneren des Trägerrohrs, die somit allesamt eine Doppelfunktion erfüllen. Durch den Verzicht auf separate Schläuche und dergleichen kann eine sehr kompakte Bauweise des Bürstenteils erreicht werden.

Der Handteil der elektrischen Zahnbürste gemäß Anspruch 6 zeichnet sich ebenfalls durch seinen kompakten Aufbau und die platzsparenden Anordnung seiner Komponenten aus. Der Druckfluidförderer sitzt zwischen dem Motor und der Getriebestufe und ist zusammen mit der Getriebestufe von einem gemeinsamen Antriebsstück angetrieben. Es ist also keine separate Getriebestufe für den Druckfluidförderer vorgesehen. Der Druckfluidförderer überträgt die Antriebsbewegung des Motors auf die Getriebestufe, die die Bewegung des Antriebsübertragers im Inneren des Trägerrohrs des Bürstenteils erzeugt bzw. wird die Antriebsbewegung des Motors durch den Druckfluidförderer hindurch auf die genannte Getriebestufe übertragen. Zusätzliche Verluste, die eine weitere Getriebestufe bewirken würde, sind vermieden. Zudem können vergleichsweise kurz Druckfluidleitungen Verwendung finden, die bei bekannter Anordnung des Druckfluidförderers auf der dem Bürstenteil abgewandten Seite des Motors wesentlich länger ausfallen.

Vorteilhafterweise wird die kompakte Anordnung jedoch nicht dadurch erkauft, dass der Druckfluidförderer in das Gehäuse des Handteils integriert bzw. von Teilen des Antriebsstrangs integral gebildet wäre. Der Druckfluidförderer ist in Weiterbildung der Erfindung, eine eigenständige, separate Komponente, die im Inneren des Handteils angeordnet ist. Vorzugsweise besteht der Druckfluidförderer aus einer Luftpumpe, wobei der Druckfluidaustrag vorzugsweise ausschließlich aus Luft besteht, d.h. es wird kein Wasser zugegeben und kein Wasserspray ausgebracht. Die Druckfluidkanäle bilden Luftkanäle.

In Weiterbildung der Erfindung sitzt der Druckfluidförderer auf einem mit der Motorwelle verbundenen Exzenterstück und trägt ein koaxiales Exzenterstück zum Antrieb der Getriebestufe. Der Druckfluidförderer kann also auf demselben Exzenterstück sitzen, welches die Getriebestufe antreibt, die die Antriebsbewegung für den Antriebsübertrager im Trägerrohr des Bürstenteils erzeugt.

Zur Weiterleitung des von der Pumpe erzeugten Druckfluidstroms wird vorzugsweise das aus dem Gehäuse des Handteils herausstehende oszillierend angetriebene Antriebselement genutzt, das mit dem Antriebsübertrager im Trägerrohr des Bürstenteils gekoppelt werden kann. Das handteilseitige oszillierend antreibbare Antriebselement kann in seinem Inneren einen mit dem Druckfluidförderer verbundenen Druckfluidkanal aufweisen. Vorzugsweise ist das Antriebselement als drehbar gelagerte Hohlwelle ausgebildet, die an ihrem aus dem Handteil herausragenden Ende ein Kupplungsstück zum Ankuppeln an den bürstenteilseitigen Antriebsübertrager aufweist, wobei das Kupplungsstück eine Fluidkupplung umfasst, die eine Weiterleitung des Druckfluids in das Innere des bürstenteilseitigen Antriebsübertragers gestattet.

Die Ausbildung der beiden zu koppelnden Antriebselemente als Hohlwellen und die Weiterleitung des Druckfluids unmittelbar von oszillierendem Antriebselement zu oszillierendem Antriebselement erlaubt es, die Ankupplung des bürstenteilseitigen Trägerrohrs an den Handteil einfach auszubilden. Das Anschlußstück am Handteilgehäuse zum lösbaren Befestigen des Trägerrohrs eines Bürstenteils kann frei von einer Druckfluidkupplung ausgebildet sein. Sowohl die Antriebskupplung als auch die Druckfluidkupplung sind an den üblicherweise aus Metall gefertigten beweglichen Antriebselementen vorgesehen, die im Inneren des Bürstenrohrs angeordnet sind.

Die handteilseitige, von der Getriebestufe angetriebene Hohlwelle kann mit dem Druckfluidförderer auf verschiedene Weise verbunden sein. Um die Bewegung des oszillierend angetriebenen Antriebselements, das aus dem Handteilgehäuse herausragt, auszugleichen, kann die Verbindung durch einen flexiblen Schlauch verwirklicht sein, der einerseits mit dem Druckausgang des Druckfluidförderers und andererseits mit dem oszillierend bewegten Antriebselement verbunden sein kann. Insbesondere kann vorgesehen sein, dass der flexible Schlauch an ein Pleuel angeschlossen ist, dass die handteilseitige Hohlwelle antreibt und in seinem Inneren einen Druckfluidkanal aufweist, der mit dem Druckfluidkanal im Inneren der Hohlwelle verbunden ist. Vorzugsweise ist der als Pumpe ausgebildete Druckförderer derart angeordnet, dass sein Druckausgang stirnseitig zum Bürstenkopf hin liegt. Hierdurch kann ein kurzer Schlauch vorgesehen werden.

Weitere Ziele, Vorteile, Merkmale und Anwendungsmöglichkeiten der vorliegenden Erfindung ergeben sich aus der nachfolgenden Beschreibung eines bevorzugten Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehungen. In den Zeichnungen zeigen:
- Figur 1: eine Gesamtansicht einer elektrischen Zahnbürste mit einem Handteil und einem darauf aufgesetzten Bürstenteil mit rotatorisch oszillierend antreibbarem Borstenträger nach einer bevorzugten Ausführung der Erfindung,
- Figur 2: eine perspektivische Ansicht des Inneren des Handteils, bei der das Handteilgehäuse weggeschnitten ist und die Anordnung einer Druckfluidpumpe und die Getriebestufe zur Erzeugung der Antriebsbewegung gezeigt ist,
- Figur 3: eine perspektivische Schnittansicht des Bürstenteils aus Figur 1, die den Verlauf der Druckfluidzufuhr in den angetriebenen Borstenträger durch den Antriebsstrang hindurch zeigt,
- Figur 4: eine schematische Schnittdarstellung der im Handteil vorgesehenen Pumpe sowie deren Anschluss an einen Druckfluidkanal im Inneren eines handteilseitigen oszillierend angetriebenen Antriebselements, das mit einem bürstenteilseitigen Antriebsübertrager gekoppelt wird, und
- Figur 5: eine schematische Teilschnittansicht der Kupplung zwischen der Pumpe und dem Exzenterstück des Motors zum Antrieb der Zahnbürste.

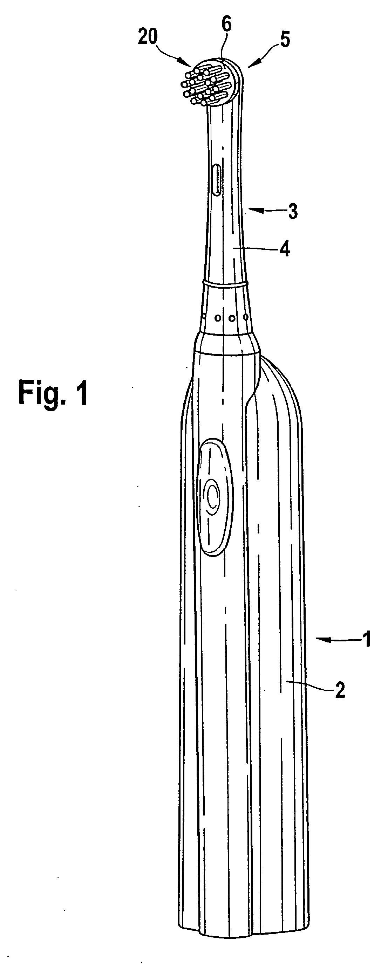

Die in Figur 1 gezeigte Zahnbürste umfasst ein Handteil 1 mit einem im wesentlichen zylindrischen Handteilgehäuse 2 sowie einem Bürstenteil 3 mit einem im wesentlichen zylindrischen Trägerrohr 4, an dessen Kopfabschnitt 5 ein Borstenträger 6 um eine Drehachse 21 quer zur Zahnbürstenlängsrichtung drehbar gelagert ist. Der Bürstenteil 3 ist lösbar mit dem Handteil 1 verbunden, so dass der Bürstenteil 3 bei Verschleiß ausgetauscht werden kann.

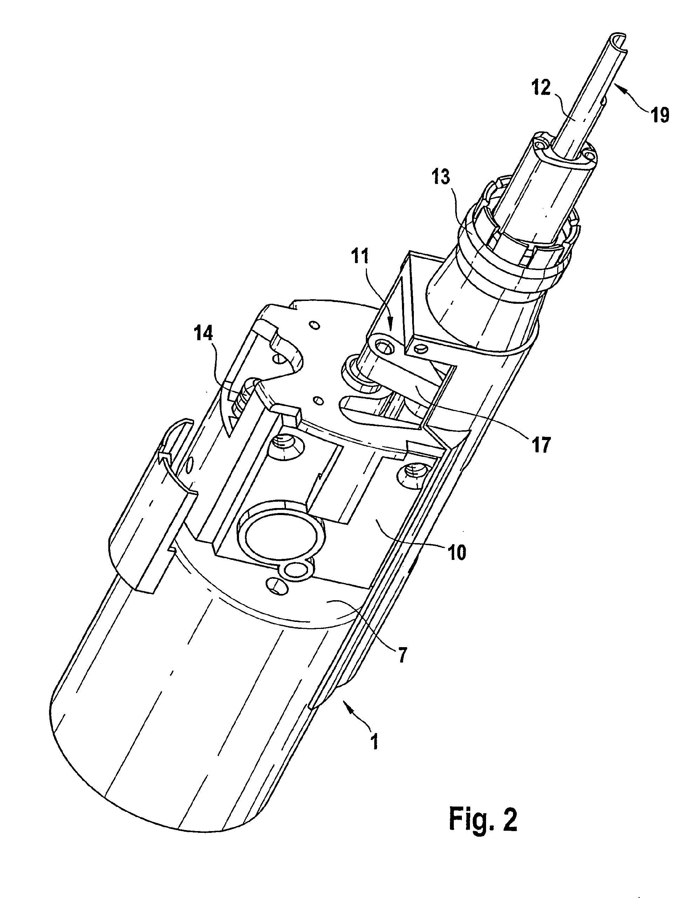

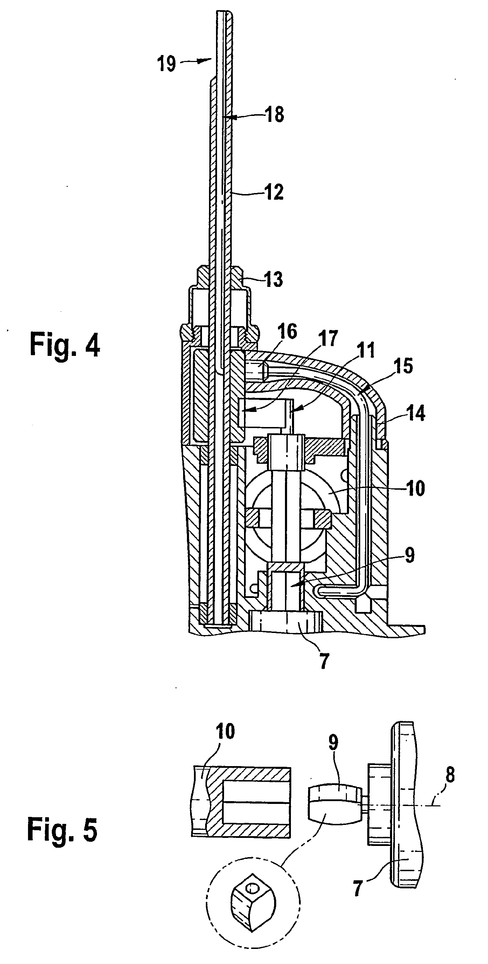

Im Inneren des Handteilgehäuses 2, das in Figur 2, 4 weggelassen ist, ist ein Elektromotor 7 angeordnet, auf dessen Motorwelle 8 ein unrundes Antriebsstück 9 drehfest sitzt. Auf dem unrunden Antriebsstück 9 sitzt wiederum eine Luftpumpe 10, die in axialer Richtung vor dem Elektromotor 7 angeordnet ist und von dem Antriebsstück 9 angetrieben wird. Dasselbe Antriebsstück 9 bzw. ein koaxial damit verbundenes Antriebsstück 9 tritt durch die Luftpumpe 10 hindurch und steht stirnseitig über diese vor. An dem stirnseitigen Ende des Antriebsstücks 9 ist eine Getriebestufe 11 in Form eines Viergelenks angeschlossen, das die Antriebsbewegung des Antriebsstücks 9 auf eine Antriebswelle 12 überträgt, die parallel zur und versetzt zur Motorwelle 8 angeordnet ist. Die Getriebestufe 11 ist dabei derart ausgebildet, dass die Antriebswelle 12 rotatorisch um ihre Längsachse oszillierend angetrieben wird. Die Antriebswelle 12 steht stirnseitig aus dem Handteilgehäuse 2 heraus, wobei das Handteilgehäuse 2 im Bereich des Austritts der Antriebswelle 12 um diese herum als Anschlussstück 13 für das Trägerrohr 4 des Bürstenteils 3 ausgebildet ist.

Die Luftpumpe 10, die über das Antriebsstück bzw. den Exzenter 9 vom Motor 7 her angetrieben wird, besitzt einen stirnseitig zu dem Bürstenteil 3 hin gewandten Druckluftauslass 14, an den eine Druckluftleitung 15 in Form eines flexiblen Schlauchs angeschlossen ist. Die Druckluftleitung 15 verbindet den Druckluftauslass 14 der Luftpumpe 10 mit einem Druckluftkanal 16, der in einem die Antriebswelle 12 antreibenden Pleuel 17 ausgebildet ist. Der als Schlauch ausgebildete Druckluftkanal 16 ist dabei so flexibel, dass er die Bewegung der Antriebswelle 12 ausgleichen kann. Der Druckluftkanal 16 in dem Pleuel 17 steht in Strömungsverbindung mit einem Druckluftkanal 18 im Inneren der Antriebswelle 12, die als Hohlwelle ausgebildet ist. Der Druckluftkanal 18 mündet am freien, aus dem Handteil 1 herausragenden Ende der Antriebswelle 12, an dem ein Kupplungsstück 19 bzw. -abschnitt vorgesehen ist, um die Antriebswelle 12 mit einem Antriebsübertrager im Inneren des Trägerrohrs 4 des Bürstenteils 3 anzukuppeln.

Wie Figur 5 zeigt, ist zwischen dem Antriebsstück 9 und der Luftpumpe 10 keine starre, d.h. völlig unbewegliche Verbindung vorgesehen. Die Verbindung ist vielmehr derart gelenkig ausgebildet, dass ein Winkelversatz zwischen dem Antriebsstück 9 und der Luftpumpe 10 bzw. dem Anschluss der Getriebestufe 11 ausgeglichen werden kann. Das Antriebsstück 9 ist hierzu nicht völlig gerade ausgebildet, sondern besitzt in Längsrichtung leicht ballige Flanken, so dass die Luftpumpe 10 quer zur Längsachse etwas kippen kann, um einen Winkelversatz auszugleichen. Die Luftpumpe 10 sitzt unmittelbar auf dem als Mehrkant ausgebildeten Anschlussstück 13, eine eigene Lagerung für die Luftpumpe ist am motorseitigen Ende nicht vorgesehen bzw. wird unmittelbar von dem Antriebsstück 9 gebildet.

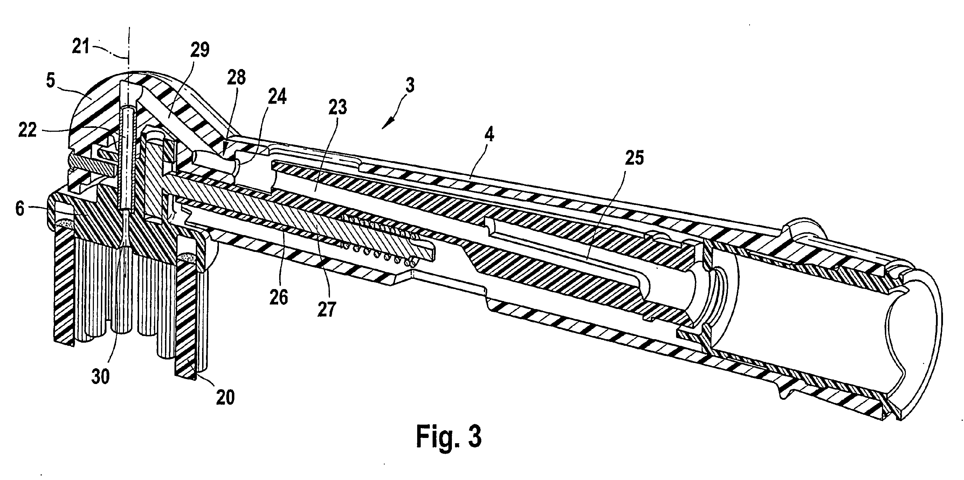

Das Bürstenteil 3 weist ein etwa kreisrundes Borstenfeld 20 auf, das auf dem teller- bzw. plattenförmigen Borstenträger 6 sitzt. Der Borstenträger 6 ist, wie Figur 3 zeigt, um eine Drehachse 21 im wesentlichen senkrecht zur Längsachse der Zahnbürste drehbar am Kopfabschnitt 5 des Trägerrohrs 4 gelagert. Die Drehachse 21 wird von einem Lagerbolzen 22 definiert, der in dem Kopfstück 5 des Bürstenteils 3 in einer entsprechenden Bohrung sitzt. Der Borstenträger 6 besitzt eine entsprechende Bohrung, mit der er auf dem Lagerbolzen 22 sitzt.

Um die Antriebsbewegung der handteilseitigen Antriebswelle 12 auf den Borstenträger 6 zu übertragen, sitzt im Inneren des Trägerrohrs 4 ein Antriebsübertrager 23, der als Antriebswelle ausgebildet ist, die um ihre Längsachse drehbar gelagert ist. Sie sitzt mit ihrem kopfstückseitigen Ende in einer Lagerbohrung 24, die im Korpus des Bürstenteils 3 ausgebildet ist. Mit ihrem handteilseitigen Ende kann die Antriebswelle 23 an die Antriebswelle 12 des Handteils drehfest verriegelt werden. Die beiden Antriebswellen 12 und 23 besitzen zueinander komplementäre Kupplungsabschnitte 19 und 25, die miteinander in drehfesten Eingriff bringbar sind. Die Kupplungsabschnitte 25 bilden dabei auch eine Fluidkupplung, um den Luftstrom, der aus der handteilseitigen Antriebswelle 12 austritt, in das Innere der Antriebswelle 23 zu leiten, die ebenfalls als Hohlwelle ausgebildet ist. Das Innere der Antriebswelle 23 bildet also ebenfalls einen Druckfluidkanal.

Die Antriebswelle 23 trägt an ihrem bürstenkopfseitigen Ende drehfest ein Exzenterstück 26, in dem ein Übertragerbolzen 27, der sich im wesentlichen parallel zu der Antriebswelle 23 erstreckt, drehbar aufgenommen ist. Der Übertragerbolzen 27 greift mit seinem stirnseitigen Ende in eine sich parallel zur Drehachse 21 erstreckende Längsausnehmung in dem Borstenträger 6 ein. Über den Übertragerbolzen 27 wird die rotatorisch oszillierende Antriebsbewegung der Antriebswelle 23 in eine ebenfalls rotatorisch oszillierende Bewegung des Borstenträgers 6 umgesetzt.

Der Druckfluidkanal im Inneren der Antriebswelle 23 mündet im Lagerabschnitt 28 um die Lagerbohrung 24 herum. Der Lagerabschnitt 28 wird vom Material des Trägerrohrs 4 bzw. des Kopfabschnitts 5 des Bürstenteils 3 gebildet. In der Wandung des Kopfabschnitts 5 schließt ein Druckfluidkanal 29 an, der mit dem Lagerabschnitt 28 bzw. der Mündung des Druckfluidkanals in der Antriebswelle 23 in Verbindung steht. Der Druckfluidkanal 29 mündet in die Bohrung für den Lagerbolzen 22, der als Hohlbolzen ausgebildet ist und den Druckfluidkanal 29 fortsetzt. Durch den Borstenträger 6 hindurch schließlich mündet der Druckfluidkanal auf der Oberfläche des Borstenträgers 6, an der das Borstenfeld 20 befestigt ist. Wie Figur 3 zeigt, erstreckt sich die entsprechende Durchtrittsöffnung für die Druckluft etwa mittig durch den Borstenträger hindurch. Die Austrittsöffnung 30 ist als Düse ausgebildet, so dass ein Freistrahl hoher Geschwindigkeit zwischen den Borsten hindurch auf die Zähne zu austritt. Selbstverständlich wäre es ebenfalls möglich, mehrere Austrittsöffnungen vorzusehen. In diesem Fall könnte in dem Borstenträger 6 eine Verteilerkammer vorgesehen sein, die von dem Kanal in der Drehachse 21 her gespeist wird und die Druckluft auf mehrere Austrittsöffnungen verteilt. Bevorzugt ist jedoch die zuvor beschriebene zentrale Austrittsöffnung.

Zur Gewährleistung einer ausreichenden Hygiene kann die Zahnbürste einen Ansaugluftfilter im Boden des Handteils 1 aufweisen, so dass nur gefilterte Luft ausgeblasen werden kann.

## Patentansprüche

1. Bürstenteil für eine elektrische Zahnbürste mit einem Trägerrohr (4), in dem ein beweglich gelagerter Antriebsübertrager (23) vorgesehen ist, der mit einem handteilseitigen Antrieb (7, 11, 12) koppelbar ist, sowie einem beweglich gelagerten Borstenträger (6), der ein Borstenfeld (20) trägt und von dem Antriebsübertrager (23) oszillierend antreibbar ist in dem ferner eine Druckfluidvorrichtung zur Beaufschlagung der zu reinigenden Zähne und/oder des Borstenfeldes (20) mit Druckfluid vorgesehen ist, **dadurch gekennzeichnet, dass** eine Druckfluidzufuhr im Inneren des Antriebsübertragers (23) angeordnet ist und der Antriebsübertrager mit einem handteilseitigen Druckfluidförderer koppelbar ist zur Weiterleitung eines Druckfluids.

2. Bürstenteil nach Anspruch 1, wobei der Antriebsübertrager (23) als Hohlwelle ausgebildet ist, die drehbar um ihre Längsachse in dem Trägerrohr (4) gelagert ist und an ihrem handteilseitigen Ende eine Kupplungsstück (25) zum Ankuppeln an ein handteilseitiges Antriebselement (12) aufweist, wobei das Kupplungsstück (25) eine Fluidkupplung umfasst, durch die der Fluidkanal (32) im Inneren der Hohlwelle mit einem Fluidkanal (18) im Inneren des handteilseitigen Antriebselements (12) verbindbar ist.

3. Bürstenteil nach einem der vorhergehenden Ansprüche, wobei die Druckfluidvorrichtung eine Druckfluidaustrittsöffnung (30), insbesondere -düse, in dem beweglichen Borstenträger (6), vorzugsweise im Bereich des Borstenfelds (20), aufweist, die mit einem Druckfluidzufuhrkanal im Inneren einer Lagerachse (22) des Borstenträgers (6) verbunden ist, wobei vorzugsweise der Borstenträger (6) mittels einer Schwenkachse, die hohl ausgebildet ist, drehbar am Trägerrohr (4) gelagert ist.

4. Bürstenteil nach einem der vorhergehenden Ansprüche, wobei das Trägerrohr (4) in seiner Wandung einen Druckfluidzufuhrkanal (29) aufweist, der vorzugsweise den Druckfluidkanal im Antriebsübertrager (23) mit einem Druckfluidkanal im Borstenträger (6) verbindet, insbesondere mit einem Ende in einem Lagerabschnitt (28) zur Lagerung des Antriebsübertragers (23) und mit seinem anderen Ende in einem Lagerabschnitt zur Lagerung des Borstenträgers (6) mündet.

5. Bürstenteil nach einem der vorhergehenden Ansprüche, wobei die Druckfluidzufuhr frei von separaten Schläuchen und/oder ausschließlich in Funktionsteilen des Bürstenteils ausgebildet ist.

6. Elektrische Zahnbürste mit einem Bürstenteil nach einem der vorhergehenden Ansprüche und mit einem Handteil mit einem Motor (7), der über eine Getriebestufe (11), insbesondere ein Vielgelenk, ein mit einem bürstenteilseitigen Antriebselement (23) koppelbares Antriebselement (12) vorzugsweise oszillierend antreibt, sowie einem Druckfluidförderer (10), der vom Motor angetrieben ist, wobei der Druckfluidförderer (10) zwischen dem Motor (7) und der Getriebestufe (11) sitzt und zusammen mit der Getriebestufe (11) von einem gemeinsamen Antriebsstück (9) angetrieben ist.

7. Elektrische Zahnbürste nach dem vorhergehenden Anspruch, wobei der Druckfluidförderer (10) auf einem mit der Motorwelle (8) verbundenen Exzenterstück (9) sitzt und ein Exzenterstück (9) zum Antrieb der Getriebestufe (11) trägt.

8. Elektrische Zahnbürste nach einem der vorhergehenden Ansprüche, wobei der Druckfluidförderer aus einer Luftpumpe (10) besteht.

9. Elektrische Zahnbürste nach einem der vorhergehenden Ansprüche, wobei das oszillierend antreibbare Antriebselement (12) in seinem Inneren einen mit dem Druckfluidförderer (10) verbundenen Druckfluidkanal (18) aufweist, vorzugsweise als drehbar gelagerte Hohlwelle ausgebildet ist.

10. Elektrische Zahnbürste nach einem der vorhergehenden Ansprüche, wobei das oszillierend antreibbare Antriebselement (12) ein Kupplungsstück (19) zum Ankuppeln an ein bürstenteilseitiges Antriebselement (23) aufweist, wobei das Kupplungsstück (19) eine Fluidkupplung umfasst.

11. Elektrische Zahnbürste nach einem der vorhergehenden Ansprüche, wobei das oszillierend antreibbare Antriebselement (12) über einen flexiblen Schlauch (15) mit dem Druckausgang (14) des Druckfluidförderers (10) verbunden ist, wobei vorzugsweise das Antriebselement (12) über ein Pleuel (17) antreibbar und der Schlauch (15) an dem Pleuel (17) angeschlossen ist, das in seinem Inneren einen Druckfluidkanal (16) besitzt, der mit dem Druckfluidkanal (18) im oszillierend antreibbaren Antriebselement (12) verbunden ist.

12. Elektrische Zahnbürste nach einem der vorhergehenden Ansprüche, wobei der Druckfluidförderer (10) ein vom Handteilgehäuse (2) separates Pumpengehäuse besitzt, insbesondere als eigene Baugruppe ausgebildet ist.

13. Elektrische Zahnbürste nach einem der vorhergehenden Ansprüche, wobei am Handteilgehäuse (2) ein Anschlussstück (13) zum lösbaren Befestigen eines Trägerrohrs (4) eines Bürstenteils (3) vorgesehen ist, wobei das Anschlussstück (13) frei von einer Antriebskupplung und frei von einer Druckfluidkupplung ausgebildet ist.

14. Elektrische Zahnbürste mit einem Bürstenteil nach einem der Ansprüche 1 bis 5.

## Claims

1. A brush piece for an electric toothbrush having a support tube (4) in which a movably mounted drive transmitter (23) is provided which is couplable to a handpiece-side drive (7, 11, 12), and a movably mounted bristle support (6) which bristle support (6) bears a bristle field (20) and is driven in oscillating manner by the drive transmitter (23), in which further a pressurized fluid device is provided for applying a pressurized fluid to the teeth to be cleaned and/or to the bristle field; **characterized in that** a pressurized fluid supply is disposed in the interior of the drive transmitter (23), and the drive transmitter is couplable to a handpiece-side pressurized fluid advancer for advancing a pressurized fluid.

2. The brush piece according to claim 1, wherein the drive transmitter (23) is formed as a hollow shaft and which is rotatably mounted in the support tube (4) to rotate around its longitudinal axis, and which has at its handpiece-side end a coupling piece (25) for coupling to a handpiece-side drive element (12), wherein the coupling piece (25) has a fluid coupling through which the fluid channel (32) in the interior of the hollow shaft is connectable to a fluid channel (18) in the interior of the handpiece-side drive element (12).

3. The brush piece according to one of the preceding claims, wherein the pressurized fluid device has a pressurized fluid exit opening (30) (in particular a nozzle) in the movable bristle support (6), preferably in the region of the bristle field (20), which opening (30) is connected with a pressurized fluid supply channel in the interior of a bearing pin (22) of the bristle support (6), wherein preferably the bristle support (6) is rotatably mounted on the support tube (4) by means of a swivel axis which is hollow.

4. The brush piece according to one of the preceding claims, wherein the support tube (4) has a pressurized fluid channel (29) in its wall, which preferably connects the pressurized fluid channel in the drive transmitter (23) to a pressurized fluid channel in the bristle support (6), particularly with one end opening out in a bearing section (28) for bearing the drive transmitter (23) and with its other end opening out in a bearing section for bearing the bristle support (6).

5. The brush piece according to one of the preceding claims, wherein the pressurized fluid supply is free from separate tubes, and/or is formed exclusively in functional pieces of the brush piece.

6. An electric toothbrush with a brush piece according to one of the preceding claims, having a handpiece with a motor (7) which drives (preferably in oscillating manner) a drive element (12) which is couplable to a brush-piece-side drive element (23) via a transmission stage (11) (particularly a multi-element linkage), and the toothbrush further having a pressurized fluid advancer (10) which is driven by the motor, wherein the pressurized fluid advancer (10) is disposed between the motor (7) and the transmission stage (11), and together with the transmission stage (11) is driven by a common drive piece (9).

7. The electric toothbrush according to the preceding claim, wherein the pressurized fluid advancer (10) is disposed on an eccentric piece (9) which is connected to the motor shaft (8), and bears an eccentric piece (9) for driving the transmission stage (11).

8. The electric toothbrush according to one of the preceding claims, wherein the pressurized fluid advancer is comprised of an air pump (10).

9. The electric toothbrush according to one of the preceding claims, wherein the oscillatingly drivable drive element (12) has in its interior a pressurized fluid channel (18) which is connected with the pressurized fluid advancer (10), and preferably is a rotatably mounted hollow shaft.

10. The electric toothbrush according to one of the preceding claims, wherein the oscillatingly drivable drive element (12) has a coupling piece (19) for coupling to a brush-piece-side drive element (23), wherein the coupling piece (19) includes a fluid coupling.

11. The electric toothbrush according to one of the preceding claims, wherein the oscillatingly drivable drive element (12) is connected via a flexible tube (15) to the pressure outlet (14) of the pressurized fluid advancer (10), wherein preferably the drive element (12) is drivable via a connecting rod (17) and the tube (15) is connected to the connecting rod (17) which has a pressurized fluid channel (16) in its interior, which channel is connected to the pressurized fluid channel (18) in the oscillatingly drivable drive element (12).

12. The electric toothbrush according to one of the preceding claims, wherein the pressurized fluid advancer (10) has a pump housing which is separate from the handpiece housing (2), and in particular is formed as a separate subassembly.

13. The electric toothbrush according to one of the preceding claims, wherein on the handpiece housing (2) a connecting piece (13) is provided for releasable attachment of a support tube (4) of a brush piece (3), wherein the connecting piece (13) is free from a drive coupling and is also free from a pressurized fluid coupling.

14. The electric toothbrush having a brush piece according to one of claims 1 to 5.

## Revendications

1. Pièce de brosse pour une brosse à dents électrique avec un tube de support (4), dans laquelle est prévu un organe de transmission d'entraînement (23) monté de façon mobile et susceptible d'être accouplé avec un entraînement (7, 11, 12) côté manche, ainsi qu'un support de poils (6) monté de façon mobile, portant un champ de poils (20) et pouvant être entraîné en oscillation par l'organe de transmission d'entraînement (23), dans laquelle est en outre prévu un dispositif pour fluide sous pression, destiné à appliquer un fluide sous pression sur les dents à nettoyer et/ou sur le champ de poils (20), **caractérisée en ce qu'**une alimentation en fluide sous pression est prévue à l'intérieur de l'organe de transmission d'entraînement (23) et **en ce que** l'organe de transmission d'entraînement peut être accouplé avec un dispositif de transport de fluide sous pression côté manche, pour le guidage d'un fluide sous pression.

2. Pièce de brosse selon la revendication 1, dans laquelle l'organe de transmission d'entraînement (23) est conçu comme un arbre creux monté en rotation autour de son axe longitudinal dans le tube de support (4), et comportant une pièce d'accouplement (25) à son extrémité côté manche, pour l'accouplement avec un élément d'entraînement (12) côté manche, dans laquelle la pièce d'accouplement (25) comprend un accouplement pour fluide permettant de relier le canal à fluide (32) à l'intérieur de l'arbre creux avec un canal à fluide (18) à l'intérieur de l'élément d'entraînement (12) côté manche.

3. Pièce de brosse selon l'une des revendications précédentes, dans laquelle le dispositif pour fluide sous pression comporte une ouverture de sortie de fluide sous pression (30), en particulier un gicleur, dans le support de poils mobile (6), de préférence dans la région du champ de poils (20), qui est reliée à un canal d'alimentation en fluide sous pression à l'intérieur d'un axe de montage (22) du support de poils (6), dans laquelle le support de poils (6) est de préférence monté de façon rotative sur le tube de support (4), au moyen d'un axe de pivotement conçu creux.

4. Pièce de brosse selon l'une des revendications précédentes, dans laquelle le tube de support (4) comporte un canal d'alimentation en fluide sous pression (29) dans sa paroi, reliant de préférence le canal de fluide sous pression dans l'organe de transmission d'entraînement (23) à un canal de fluide sous pression dans le support de poils (6), et débouchant en particulier à une extrémité sur une section de montage (28) destinée au montage de l'organe de transmission d'entraînement (23), et à son autre extrémité sur une section de montage destinée au montage du support de poils (6).

5. Pièce de brosse selon l'une des revendications précédentes, dans laquelle l'alimentation en fluide sous pression est conçue libre de tubes séparés et/ou exclusivement dans des pièces fonctionnelles de la pièce de brosse.

6. Brosse à dents électrique avec une pièce de brosse selon l'une des revendications précédentes, et avec un manche comportant un moteur (7) permettant d'entraîner, de préférence par oscillation, un élément d'entraînement (12) susceptible d'être accouplé avec un élément d'entraînement (23) côté pièce de brosse, par le biais d'un étage de transmission (11), en particulier d'une articulation plurielle, ainsi qu'un dispositif de transport de fluide sous pression (10) entraîné par le moteur, **caractérisée en ce que** le dispositif de transport de fluide sous pression (10) est logé entre le moteur (7) et l'étage de transmission (11), et entraîné ensemble avec l'étage de transmission (11), par une pièce d'entraînement (9) commune.

7. Brosse à dents électrique selon la revendication précédente, dans laquelle le dispositif de transport de fluide sous pression (10) est logé sur une pièce excentrique (9) reliée à l'arbre de moteur (8), et porte une pièce excentrique (9) pour l'entraînement de l'étage de transmission (11).

8. Brosse à dents électrique selon l'une des revendications précédentes, dans laquelle le dispositif de transport de fluide sous pression est constitué d'une pompe à air (10).

9. Brosse à dents électrique selon l'une des revendications précédentes, dans laquelle l'élément d'entraînement (12) entraîné par oscillation comporte, en son intérieur, un canal de fluide sous pression (18) relié au dispositif de transport de fluide sous pression (10), tout en étant de préférence conçu comme un arbre creux monté en rotation.

10. Brosse à dents électrique selon l'une des revendications précédentes, dans laquelle l'élément d'entraînement (12) entraîné par oscillation comporte une pièce d'accouplement (19) pour l'accouplement avec un élément d'entraînement (23) côté pièce de brosse, dans laquelle la pièce d'accouplement (19) comprend un accouplement pour fluide.

11. Brosse à dents électrique selon l'une des revendications précédentes, dans laquelle l'élément d'entraînement (12) entraîné par oscillation est relié par un tuyau souple (15) à la sortie de pression (14) du dispositif de transport de fluide sous pression (10), dans laquelle l'élément d'entraînement (12) est entraîné de préférence par une bielle (17), et le tuyau (15) est raccordé à la bielle (17), qui en son intérieur possède un canal de fluide sous pression (16) relié au canal de fluide sous pression (18) situé dans l'élément d'entraînement (12) entraîné par oscillation.

12. Brosse à dents électrique selon l'une des revendications précédentes, dans laquelle le dispositif de transport de fluide sous pression (10) possède un boîtier de pompe séparé du boîtier de manche (2), qui est en particulier conçu comme un bloc individuel.

13. Brosse à dents électrique selon l'une des revendications précédentes, dans laquelle une pièce de raccordement (13) est prévue sur le boîtier de manche (2), pour la fixation détachable d'un tube de support (4) d'une pièce de brosse (3), dans laquelle la pièce de raccordement (13) est conçue libre d'un accouplement d'entraînement et libre d'un accouplement pour fluide sous pression.

14. Brosse à dents électrique avec une pièce de brosse (3) selon l'une des revendications 1 à 5.
